# EUROPEAN PATENT APPLICATION

(11) **EP 4 542 467 A1**
(43) Date of publication of application: **23.04.2025**
(21) Application number: 23204276.2
(22) Date of filing: 18.10.2023
(51) Int. Cl.: G06Q 10/06, G06Q 30/01

(54) **METHOD AND SYSTEM FOR GENERATING REPORT USING COMPANY DATA**

(30) Priority: 17.10.2023 KR 20230138305
(71) Applicant: 42Maru Inc., Seocho-gu Seoul 06533 (KR)
(72) Inventor: Kim, Dong Hwan, Seoul (KR); Seong, Gil Je, 107-1004 Gyeonggi-do (KR); Kwon, You Kyung, Seoul (KR); Park, Ju Shick, 104-1605 Gyeonggi-do (KR); Chang, Hyung Jin, Seoul (KR); Roe, Sook Jin, Seoul (KR)
(74) Representative: AWA Sweden AB

(57) **Abstract**

The present invention relates to a method and system for generating a report using company data. There is provided a method of generating a report using company data, according to the present invention, the method may include: collecting subscription company data related to a company subscribing to a platform; storing the collected subscription company data in association with a subscription company account; receiving consultation information through a consultation channel associated with the platform; specifying a consultee from the consultation information, and collecting consultee data related to the specified consultee; generating a report related to the specified agent, using a language model with at least some of the subscription company data and the consultee data as input; and providing the generated report to a subscriber account of the subscription company.

## Description

### CROSS REFERENCE TO RELATED APPLICATION

The present application claims priority to Korean Patent Application No. 10-2023-0138305, filed October 17, 2023, the entire contents of which is incorporated herein for all purposes by this reference.

### BACKGROUND OF THE INVENTION

### Field of the Invention

The present invention relates to a method and system for generating a report using company data.

### Description of the Related Art

Recently, with the rapid development of artificial intelligence (AI) technology, language models (e.g., ChatGPT) have emerged that enable natural conversations with humans.

As such, the language model demonstrates a technical capability to communicate naturally and provide fast and accurate information in a human-like manner, showing innovation in the AI market, unlike the existing manually built chatbots that provide only limited answers.

Meanwhile, when users inquire about a product or service, they approach companies through a variety of channels, and the companies put considerable effort into answering each inquiry individually and promoting their products.

However, this method is a waste of time and manpower, which leads to inefficient results. In addition, it is also quite common for users to receive unsatisfactory responses due to human subjectivity and bias in the process of promoting products or answering inquiries.

Accordingly, the present invention proposes a service that can efficiently respond to the user's inquiry and provide a meeting strategy document to more effectively promote the company's products or services by using a large language model.

### SUMMARY OF THE INVENTION

The present invention relates to a method and system for generating a report that is capable of efficiently responding to a user's inquiry using a platform that has been trained with data related to a company and a channel in conjunction therewith.

Further, the present invention relates to a method and system for generating a report using company data that can generate a strategy report for a business using company data and consultee data.

Further, the present invention relates to a method and system for generating a report using company data that allows a company to more effectively promote the company's products or services through a strategy report.

There is provided a method of generating a report using company data, according to the present invention, to solve the objects described above, the method may include: collecting subscription company data related to a company subscribing to a platform; storing the collected subscription company data in association with a subscription company account; receiving consultation information through a consultation channel in conjunction with the platform; specifying a consultee from the consultation information, and collecting consultee data related to the specified consultee; generating a report related to the specified agent, using a language model with at least some of the subscription company data and the consultee data as input; and providing the generated report to a subscriber account of the subscription company.

Further, the method may further include: searching for information related to the specified consultee through an external website, in which the collecting of the consultee data may include collecting the consultee data from a search result of the searching, in which the generating of the report may include generating the report using the consultee data collected from the external website, and in which the specified consultee may be a specific company or a specific individual.

Further, the method may further include: specifying, by analyzing the consultation information, a consultation topic related to the specified consultee; and specifying specific company data related to the consultation topic among the company data, in which in the generating of the report, the specific company data related to the consultation topic may be processed as input to the language model, such that the report is generated in relation to the consultation topic.

Further, the searching may further include: specifying a topic keyword related to the consultation topic; setting a search term to include a name of the specified consultee and the topic keyword; and searching, using the search term, for information related to the specified consultee, from the external website, in which in the generating of the report, the report may be generated in relation to the consultation topic, using a search result searched from the external website and specific company data related to the consultation topic as the search term including the topical keyword.

Further, the report may be configured to include content for each of a plurality of predefined categories, and in which the plurality of categories may include at least one of a summary category configured to summarize the consultation information, a company current situation category including company information of the specified consultee, a latest current situation category including latest information on the specified consultee, or a strategy category including strategy information on meeting with the consultee.

Further, in the generating of the report, at least one category of the plurality of categories requiring content generation may be specified by analyzing the consultation information, content may be generated in each of the specified categories, using the specific company data and the consultee data related to the consultation topic, and in relation to the generation of the report, upon receipt of a request related to the generation of the report from the subscriber account" the report may be generated by reflecting the received request.

Further, the strategy category may be configured to include a plurality of sub-categories, and in which the plurality of sub-categories may include a consultation intent identification category for the specified consultee and a winning scenario category for the specified consultee.

Further, the winning scenario may include content for a list of meeting topics with the specified consultee and an allocation time for each of the list of meeting topics.

Further, the generated report may be provided to a subscriber account of the subscription company using a search result searched from the external website using specific company data related to the consultation topic as the search term including the topic keyword.

Further, in the platform, a plurality of subscriber accounts may be registered and exist, each corresponding to a plurality of subscribers belonging to the subscription company, in which in the providing of the report, among the plurality of subscribers, a specific subscriber having a job related to the consultation topic may be specified, and in which the report may be provided to the subscriber account of the specific subscriber that has been specified.

Further, the consultation information may be received through a chatbot installed on a homepage of the subscription company and in conjunction with the platform.

Further, the consultation information may be configured with a query input from the specified consultee through the chatbot and an answer to the query generated using the language model.

Further, the consultation information may be received through at least one of an inquiry page on the homepage of the subscription company, an external messenger in conjunction with the platform, or an AI contact center (AICC) in conjunction with the platform.

Meanwhile, there is provided a system for generating a report using company data, according to the present invention, the system may be configured to: collect, in cooperation with at least one artificial intelligence model, subscription company data related to a platform subscription company; store the collected subscription company data in association with a subscription company account; receive consultation information through a consultation channel in conjunction with the platform; specify a consultee from the consultation information; collect consultee data related to the specified consultee; generate a report related to the specified consultee, using a language model with at least some of the subscription company data and the consultee data as input; and provide the generated report to a subscriber account of the subscriber company.

Meanwhile, there is provided a program executed by one or more processes on an electronic device and capable of being stored on a computer-readable recording medium, in which the program may include instructions to perform steps of: collecting subscription company data related to a platform subscription company; storing the collected subscription company data in association with a subscription company account; receiving consultation information through a consultation channel in conjunction with the platform; specifying a consultee from the consultation information; collecting consultee data related to the specified consultee; generating a report related to the specified consultee, using a language model with at least some of the subscription company data and the consultee data as input; and providing the generated report to a subscriber account of the subscriber company.

As described above, the method and system for generating a report using company data, according to the present invention, can specify which company consultation information received through a consultation channel in conjunction with a platform is for, and provide an appropriate answer to a consultee's consultation content for a specified company using various artificial intelligence algorithms.

Further, by matching a subscriber who has a job related to a consultation topic, it is possible to provide a report that includes various contents. The subscriber who receives the report will be able to more effectively promote products or services of the company that the subscriber is affiliated with through the various contents included in the report, and lead business growth using efficient marketing strategies.

### BRIEF DESCRIPTION OF THE DRAWINGS

FIG. 1 is a conceptual view for describing a system for generating a report using company data according to the present invention.
FIG. 2 is a conceptual view for describing a method of inputting company data and consultee data into a language model in the present invention.
FIGS. 3 and 4 are conceptual views for describing a method of receiving consultation information in the present invention.
FIG. 5 is a flowchart for describing a method of generating a report using company data.
FIG. 6, FIG. 7, FIG. 8A, FIG. 8B, FIG. 9, and FIG. 10 are conceptual views for describing the method of generating a report using company data.

### DETAILED DESCRIPTION OF THE INVENTION

Hereinafter, exemplary embodiments disclosed in the present specification will be described in detail with reference to the accompanying drawings. The same or similar constituent elements are assigned with the same reference numerals regardless of reference numerals, and the repetitive description thereof will be omitted. The suffixes "module", "unit", "part", and "portion" used to describe constituent elements in the following description are used together or interchangeably in order to facilitate the description, but the suffixes themselves do not have distinguishable meanings or functions. In addition, in the description of the exemplary embodiment disclosed in the present specification, the specific descriptions of publicly known related technologies will be omitted when it is determined that the specific descriptions may obscure the subject matter of the exemplary embodiment disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

Singular expressions include plural expressions unless clearly described as different meanings in the context.

In the present application, it should be understood that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

### 1. Overall content of the present invention

The present invention relates to a method and system for generating a report using company data, which can efficiently respond to a user's query received through a platform that has been trained with data related to a company and a consultation channel in conjunction therewith.

Furthermore, the present invention can provide a service that can generate a strategy report for a business and more effectively promote products (or goods) or services of a company using company data and consultee data.

In this specification, for convenience of description, a company that subscribes to a platform provided by the present invention is referred to as a "platform subscription company" or "subscription company", and a member affiliated with the platform subscription company is referred to as a "subscriber". In addition, a user who proceeds with a consultation through various consultation channels of the platform subscription company is referred to as a "consultee".

A consultation channel as described in the present invention may mean a form of channel or page that can specify an identity of a company. For example, the consultation channel may be at least one of an inquiry page on a homepage (e.g., "contact us"), a chatbot, an AI contact center (AICC), or an external channel (e.g., KakaoTalk).

Hereinafter, for convenience of description, it is assumed that consultation information is received through a "chatbot" among various consultation channels.

The chatbot is a software application that is capable of having a natural conversation with a human. More specifically, the chatbot may be understood as a computer program that uses an artificial intelligence (AI) and natural language processing (NLP) to simulate human conversation to understand and automatically respond to a customer's question.

To build such a chatbot (or conversational AI system), a "prompt engineering" technology is used, which performs natural language processing tasks using a large language model (LLM). Hereinafter, the large language model (LLM) is referred to as a "language model" for convenience of description.

The prompt engineering means a task of task of designing (or configuring) an appropriate prompt to achieve a desired output from a language model.

Here, the prompt is an input value for generating a response (or answer or result) from the language model, in which the prompt includes an element related to an instruction or command to the language model, and the language model generates a response based thereon.

Furthermore, the large language model (LLM) is a model trained on a large amount of language data and is used to perform natural language processing tasks (e.g., machine translation, text summarization, automatic writing, question answering, etc.) through deep learning algorithms and statistical modeling.

For example, the language model may include at least one of generative pre-trained transformer (GPT), bidirectional encoder representations from transformers (BERT), and language model for dialog applications (LaMDA).

In the present invention, data processing may be performed to generate a strategy report for a business by inputting at least some of the platform subscription company data and consultee data, and an appropriate prompt based thereon, into the language model.

The language model used in the present invention may be understood as a language model in which a process of prompt engineering has been performed such that the language model may be used to efficiently respond to a consultee's inquiry received through a consultation channel in conjunction with the platform, or to generate a strategy report for a business.

In the present specification, the specific description of the process in which prompt engineering is performed is omitted, and the description of the present specification is based on an assumption that the prompt engineering process is performed to generate a response corresponding to an intent of a consultee's query and a strategy report for a business.

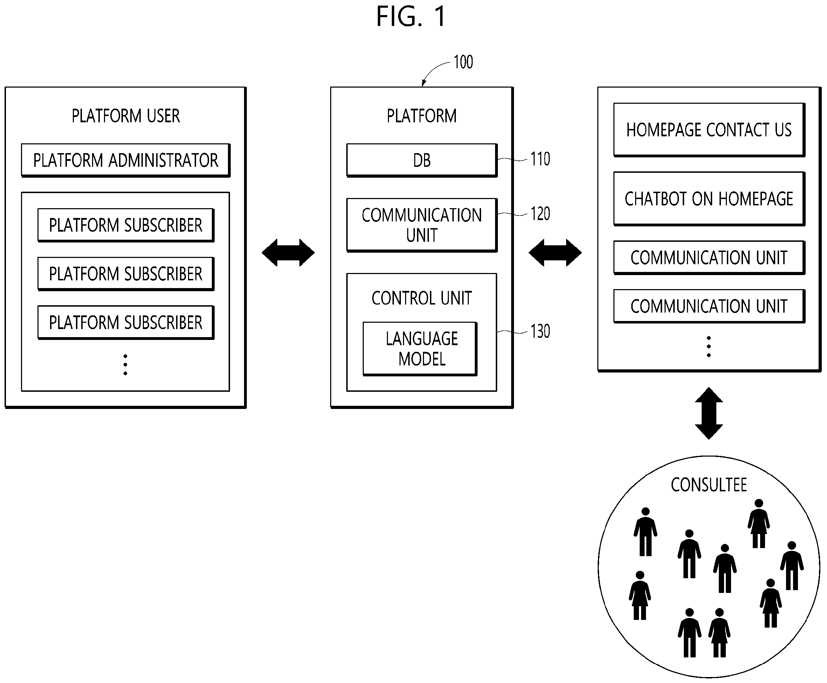

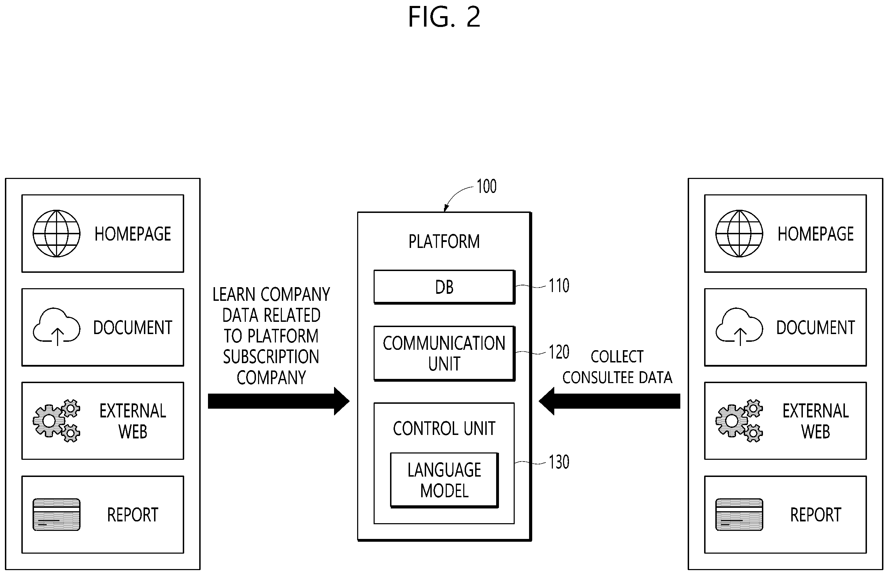

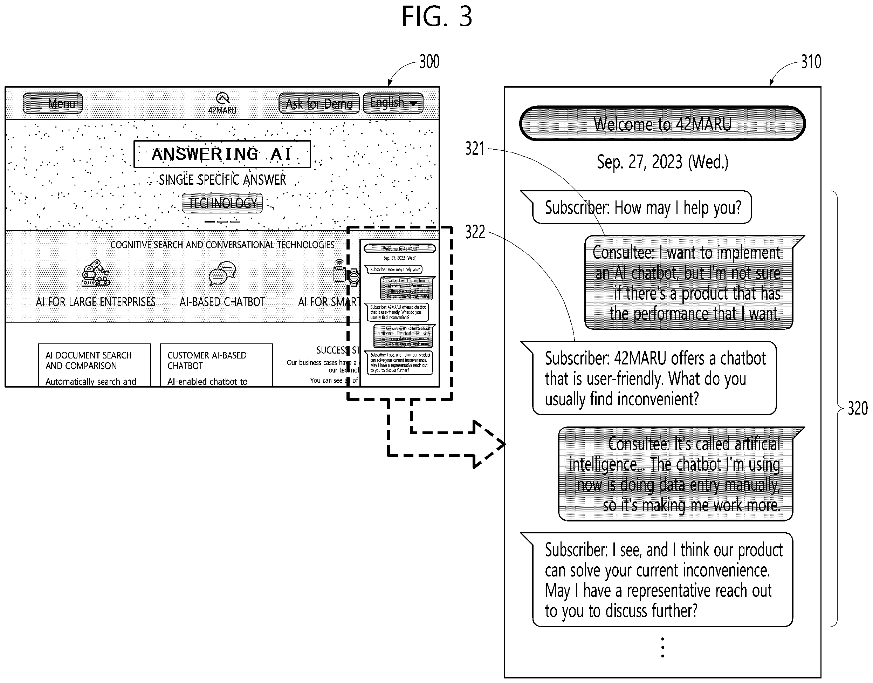

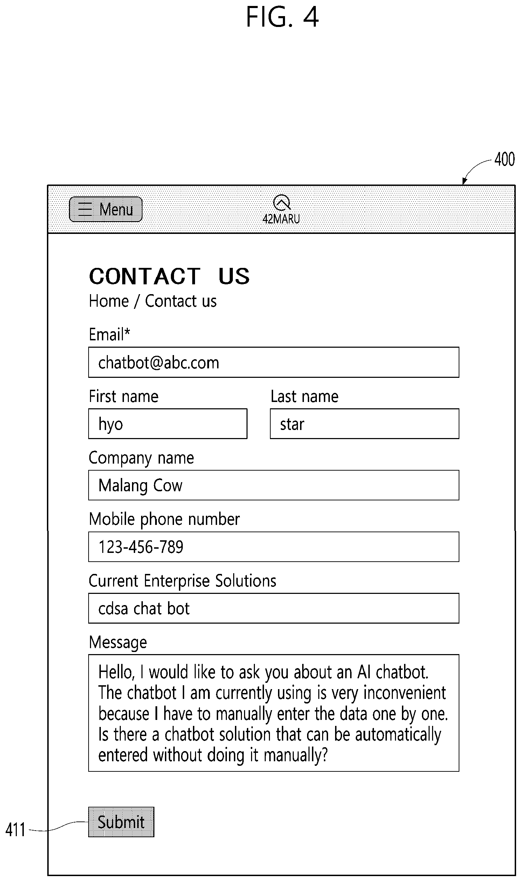

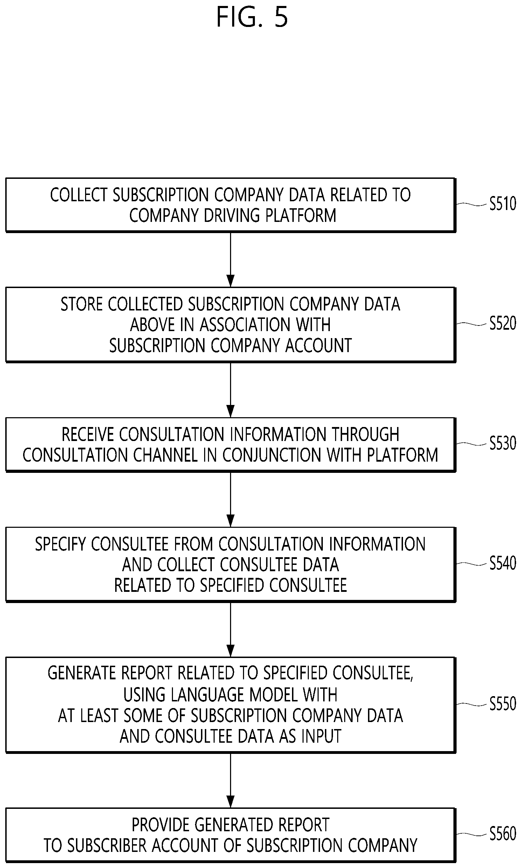

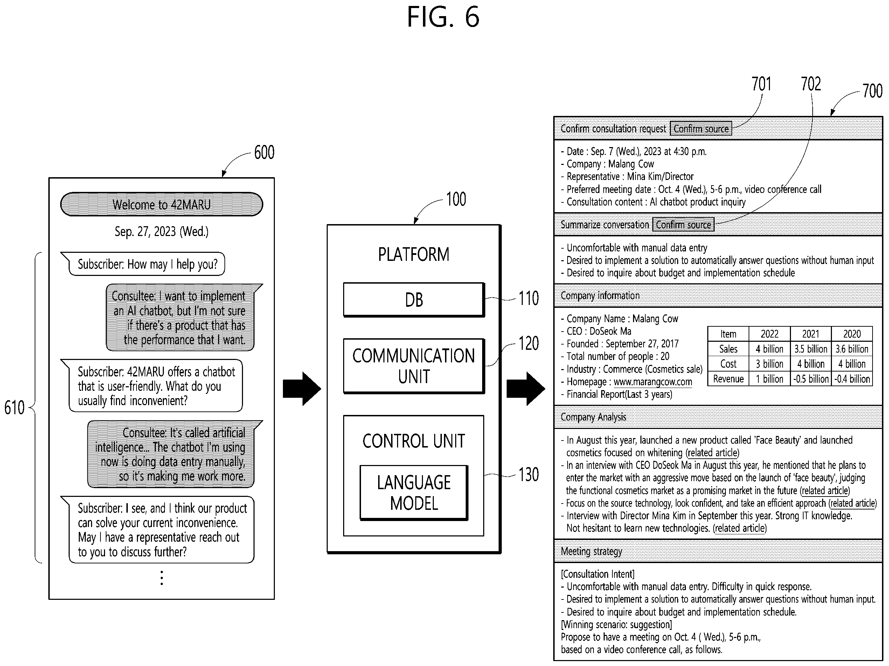

Hereinafter, a method and system for generating a report using company data according to the present invention will be described in more detail with reference to the accompanying drawings. FIG. 1 is a conceptual view for describing a system for generating a report using company data according to the present invention. FIG. 2 is a conceptual view for describing a method of inputting company data and consultee data into a language model in the present invention, FIGS. 3 and 4 are conceptual views for describing a method of receiving consultation information in the present invention, FIG. 5 is a flowchart for describing a method of generating a report using company data, and FIG. 6, FIG. 7, FIG. 8A, FIG. 8B, FIG. 9, and FIG. 10 are conceptual views for describing the method of generating a report using company data.

A system 100 for generating a report according to the present invention may be used interchangeably with a platform 100, and in the present invention, the system 100 for generating a report and the platform 100 may be interpreted in the same meaning.

As illustrated in FIG. 1, the system 100 for generating a report according to the present invention may be configured to include at least one of a database (DB) 110, a communication unit (120), and a control unit (130). In this case, the system 100 for generating a report according to the present invention is not limited to the mentioned components, and may further include components that perform the same or similar functions as those described in the present specification.

The database 110 may also be referred to as a storage unit, and may be configured to store various information related to the present invention. In the present invention, the database 110 may be provided in the system 100 for generating the report itself. In addition, at least some of the database 110 may be configured as a cloud server (or cloud storage). That is, it may be understood that the database 110 is sufficient to be a space in which information required to provide a service to generate a report according to the present invention is stored, and is not limited by a physical space.

The database 110 may store various information on a subscription company that subscribes to and uses the system 100 for generating a report according to the present invention. For example, the information on the subscription company may include at least one of a subscription company account, a product (or merchandise) description uploaded directly by the subscription company, information on a product sold by the subscription company, various information disclosed on a homepage of the subscription company, a public disclosure material of the subscription company, a credit rating material, a job posting, the latest news, a CEO interview, or a press release. However, the information on the subscription company is not limited to the information described above and may include other information in addition to the mentioned.

Further, the database 110 may store user information registered with the system 100 for generating a report according to the present invention. The user information registered in the system 100 for generating a report may be understood as information on a subscriber affiliated with the subscription company that subscribes to and uses the platform system 100. The subscriber information may include information on a plurality of subscriber accounts (e.g., identification (ID)), each corresponding to a plurality of subscribers affiliated with the platform subscription company. For example, the subscriber information may include at least one of a name, a gender, an affiliation, a job, an address, an age, a phone number, or personal information.

Next, the communication unit 120 may be configured to transmit or receive data, and may support various communication methods depending on the communication standards of devices (or electronic appliances) in communication.

For example, the communication unit 120 may be configured to perform the communication using at least one of wireless LAN (WLAN), wireless-fidelity (Wi-Fi), wireless-fidelity (Wi-Fi) direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), fifth generation mobile telecommunication (5G), Bluetooth^{™} radio frequency identification (RFID), infrared communication (infrared data association (IrDA)), ultra-wideband (UWB), ZigBee, near field communication (NFC), Wi-Fi direct, or wireless universal serial bus (wireless USB) technologies.

Meanwhile, the control unit 130 may be configured to control an overall operation of the system 100 for generating a report related to the present invention.

Specifically, the control unit 130 may process signals, data, information, and the like that are input or output through the constituent elements described above, or may provide or process appropriate information and functions to a user.

Further, the control unit 130 may use the language model to efficiently respond to the consultation information received through the consultation channel in conjunction with the platform 100, or perform data processing to generate a strategy report for a business.

However, the processes performed in the present invention may also be performed by the control unit 130 itself, and will be described below without making a distinction in the case described above.

Hereinafter, a method of generating a report using company data according to the present invention will be described in more detail with reference to the accompanying drawings.

### 2. Main Process

As described above, the present invention may efficiently respond to the consultation information received through the consultation channel in conjunction with the platform 100, or perform a process to generate a strategy report for a business using the platform subscription company data and consultee data.

In the present invention, various artificial intelligence technologies may be used to perform the process of generating a response corresponding to an intent of a consultee's query and a strategy report for a business. Examples of artificial intelligence technologies used to perform the processes as described above may include at least one of machine reading comprehension (MRC), paraphrasing, abstract summarization, text generation (TG), question generation (QG), natural language understanding (NLU), OCR-NLP (Textanding), or natural language-based query (NL2SQL).

These technologies may also be understood as technologies that are used to perform tasks related to natural language processing (NLP), optical character recognition, computer vision, and the like.

As described above, the control unit 130 may use at least one of various artificial intelligence technologies to perform data processing to generate a response corresponding to an intent of a consultee's query and a strategy report for a business.

However, the artificial intelligence technologies described above are just illustrative, and any artificial intelligence technology may be used to perform the process of generating a response corresponding to an intent of a consultee's query and a strategy report for a business.

The processes described below may be understood to be performed using various artificial intelligence technologies, as described above.

Meanwhile, each company that subscribes to the platform 100 provided in the present invention may have a consultation channel in conjunction with the platform 100, and may have a subscription company account registered on the platform 100.

In this case, in the platform 100, subscription company data associated with the subscription company account subscribing to the platform 100 may be pre-stored and present.

In this case, there may be a variety of spaces where the platform subscription company data associated with the platform subscription account is stored. For example, as illustrated in FIG. 1, the platform subscription company data may be stored in the database 110. As another example, the platform subscription company data may be stored on at least one of a cloud server (or cloud storage) that constitutes at least a portion of the database 110 and a central server or external server (e.g., a company server) in conjunction with the system 100 for generating a report.

Meanwhile, there may be various paths in which the platform subscription company data is collected. For example, as illustrated in FIG. 2, the path of collecting the platform subscription company data may be at least one of a server of the subscription company, a social networking service (SNS) of the subscription company, a homepage of the subscription company, an electronic document or report created by the subscription company, or an external website including information related to the subscription company.

Further, there may be various methods of collecting data related to the platform subscription company. As an example, the method of collecting data may be at least one of web crawling, web scraping, extract, transform, and load (ETL), log collection, file transfer protocol (FTP), or application programming interface (API).

However, the method or path of collecting the platform subscription company data is not limited to the case described above and may include other methods or paths in addition to the mentioned.

Meanwhile, the control unit 130 may receive the consultation information input from a consultee through a consultation channel in conjunction with the platform 100.

Here, the consultation channel may be at least one of the inquiry page (e.g., "contact us") on the homepage of the subscription company, a chatbot on the homepage in conjunction with the platform 100, an AI contact center (AICC), or an external channel (e.g., KakaoTalk).

When the consultation information is received from the consultation channel of the subscription company in conjunction with the platform 100, the control unit 130 may specify which specific subscription company among the platform subscription companies the consultation information is for.

As another example, the control unit 130 may also specify which specific subscription company the consultation information is for through an analysis of a consultee's query included in the consultation information. In this case, the subscription company related to the consultation information may be specified with reference to the subscription company data stored in association with the platform subscription company account.

Meanwhile, when the consultation information is received through a consultation channel in conjunction with the platform 100, the control unit 130 may analyze an intent of a consultee's query (or question) included in the consultation information, and provide an appropriate answer (or response) corresponding to the intent of the consultee's query.

The control unit 130 may use at least one of various artificial intelligence technologies to analyze the intent of the consultee's query and provide an answer corresponding to the intent of the consultee's query. As described above, the artificial intelligence technologies may include at least one of machine reading comprehension (MRC), paraphrasing, abstract summarization, text generation (TG), question generation (QG), natural language understanding (NLU), OCR-NLP (Textanding), or natural language-based query (NL2SQL).

Further, the control unit 130 may specify a consultee from the consultation information received through the consultation channel in conjunction with the platform 100.

To this end, the control unit 130 may receive, along with the consultation information, consultee information including at least one of a name, a gender, an affiliated company (or company), a work title (or work position), an email, a telephone number, or personal information for the consultee. A method of receiving the consultee information will be described in more detail below.

Meanwhile, the control unit 130 may search for information on the specified consultee using an external website, a report, newspaper news, a company's credit rating material, or the like. For example, the external website may include at least one of a portal site, a social networking service (SNS), a blog, and a homepage of a company that the specific consultee is affiliated with.

However, the external website for searching for information related to the specified consultee is not limited to the case described above, and may include others in addition to the mentioned.

Specifically, the control unit 130 may generate a search term to search for information related to the specified consultee on the external website.

To generate the search term as described above, the control unit 130 may specify a consultation topic related to the consultee through an analysis of the intent of the query of the specified consultee.

Specifying the consultation topic related to the specified consultee may be understood as a process of setting a search term such that at least one information related to the specified consultee is associated with the consultation topic specified through an analysis of the consultation information.

Further, the control unit 130, upon completion of the specification of the consultation topic, may perform an operation to specify a topic keyword from the specified consultation topic.

However, the specification of the consultation topic and topic keyword may also be specified using the language model present in the platform 100. For example, the language model may analyze the consultation information received from the consultation channel in conjunction with the platform 100 to specify a consultation topic related to the consultation information, and specify a topic keyword from the specified consultation topic.

Meanwhile, the control unit 130 may, upon completion of the extraction of the topic keyword, generate (or set) a search term to associate the topic keyword with information related to the specified consultee.

The search term, which is generated by associating information related to the specified consultee with the topic keyword, may be appropriately combined such that data related to the specified consultee may be collected through a search for the information related to the specified consultee. This will be described in more detail below.

Further, the control unit 130 may collect data related to the specified consultee from a search result of the external website using the set search term. For example, data related to the specified consultee may include news articles, interviews, posts on social networking services and blogs that include information related to the specified consultee, or information related to the company with which the specified consultee is affiliated.

Meanwhile, the control unit 130 may, upon completion of the collection of the subscription company data and the consultee data, specify specific company data related to the consultation topic among subscription company data pre-stored in the platform 100 or the database 110.

Specifically, the control unit 130 may perform data mining on the subscription company data pre-stored in the platform 100 to specify the specific company data related to the consultation topic.

The control unit 130 may use various artificial intelligence algorithms to specify the specific company data related to the consultation topic among the subscription company data pre-stored in the platform 100. Examples of artificial intelligence algorithms to specify the specific company data related to the consultation topic may include at least one of natural language processing (NLP), machine learning (ML), deep learning, clustering, decision tree, support vector machine (SVM), or random forest.

That is, the control unit 130 may use at least one of various algorithms to perform data processing to specify the specific company data related to the consultation topic among the subscription company data pre-stored and present in the platform 100.

However, the artificial intelligence algorithm described above is just illustrative, and any artificial intelligence algorithm may be used to specify the specific company data related to the consultation topic among the subscription company data.

Meanwhile, the control unit 130 may, upon completion of the specification of the specific company data, process at least some of the specific company data and the consultee data related to the consultation topic as input to the language model such that a report is generated in relation to the specified consultation topic.

As described above, the language model is a model trained on a large amount of language data and may perform natural language processing tasks (e.g., machine translation, text summarization, automatic writing, question answering, etc.) through deep learning algorithms and statistical modeling.

The language model used in the present invention may be understood as a language model in which a prompt engineering process has been performed, such that the language model may be used to generate a report related to the specified consultation topic.

The control unit 130 may generate a report related to the specified consultation topic from a search result on the external website, using the language model with data related to the specified consultee and the specific company data related to the consultation topic as input.

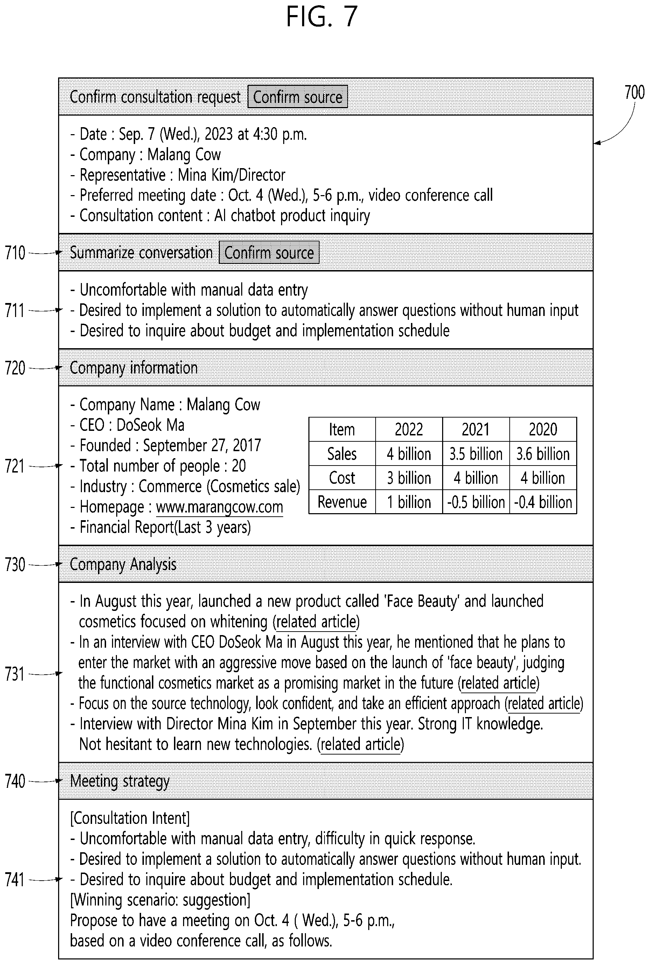

The report generated by the present invention may be configured to include a plurality of predefined categories. For example, as illustrated in FIG. 7, each of a plurality of predefined categories 710, 720, 730, and 740 included in a report 700 may include at least one of a summary category (e.g., "summarize conversation," 710) summarizing the consultation information, a company current situation category (e.g., "company information," 720) including company information for the specified consultee, a latest current situation category (e.g., "company analysis," 730) including latest information on the specified consultee, or a strategy category (e.g., "meeting strategy," 740) including meeting strategy information with the specified consultee.

In this case, in each of the plurality of categories included in the report, content for each of the plurality of categories may be included and exist. For example, as illustrated in FIG. 7, in each of the plurality of categories 710, 720, 730, and 740, content 711, 721, 731, or 741 may be included and exist.

The control unit 130 may specify at least one category of the plurality of predefined categories 710, 720, 730, and 740 that requires content to be generated.

That is, the control unit 130 may use at least some of the platform subscription company data and consultee data to specify categories that require content generation, and generate content for each of the specified categories.

Meanwhile, the plurality of categories present in the report generated in relation to the consultation topic may include the strategy category. In this case, the strategy category may be configured to include a plurality of sub-categories.

The strategy category may include information to more effectively promote the products or services of the company, such as a business strategy and drive business growth using efficient marketing strategies, through the analysis of the personality of a representative identified through persona analysis for the specified consultee and the data related to the specified consultee.

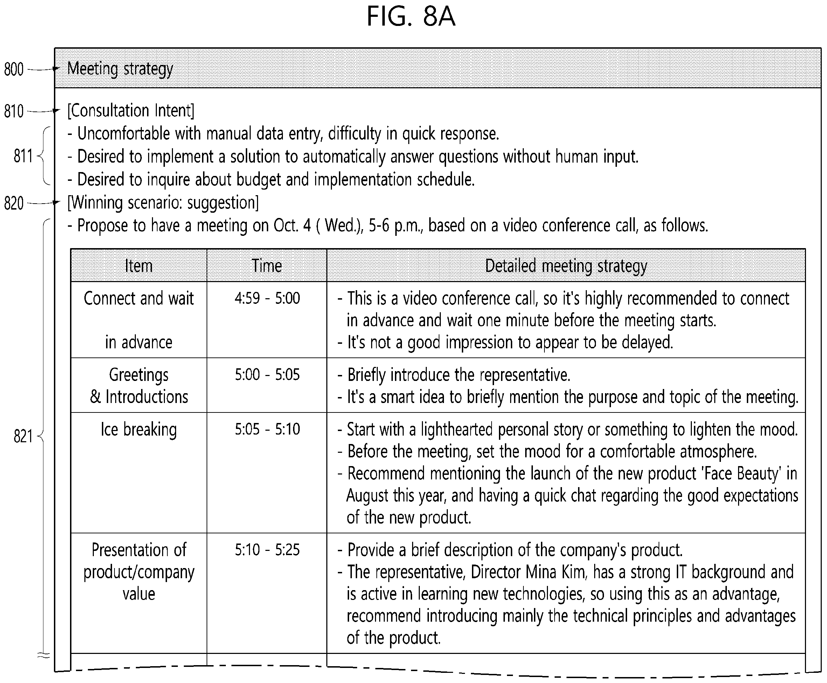

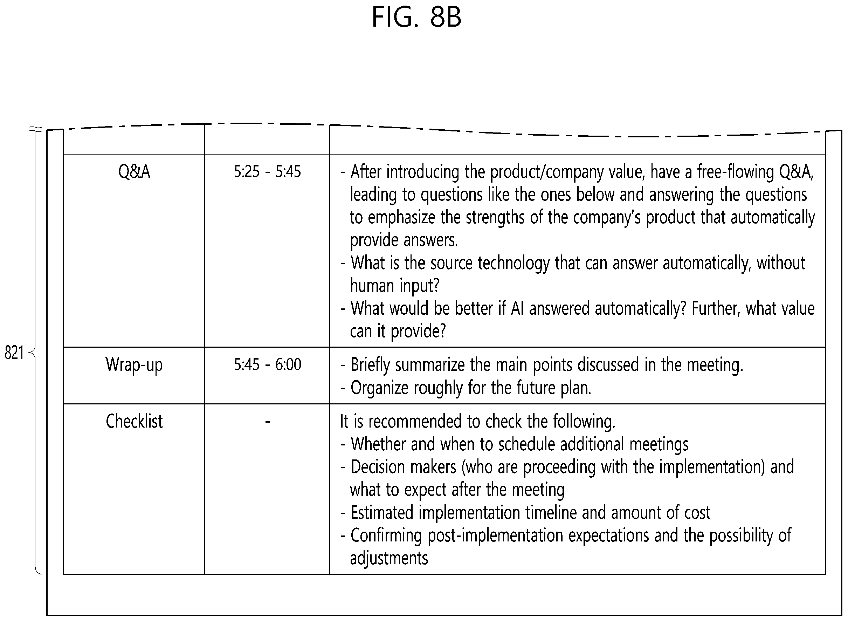

For example, as illustrated in FIGS. 8A and 8B, the strategy category 800 may include a plurality of sub-categories 810 and 820, including a consultation intent identification category 810 for the specified consultee and a winning scenario category 820 for the specified consultee.

The consultation intent identification category 810 of the plurality of sub-categories 810 and 820 of the strategy category 800 may include content regarding what intent the consultee had in requesting the consultation, by analyzing the intent of the consultation information.

Further, the winning scenario category 820 of the plurality of sub-categories 810 and 820 of the strategy category 800 may include content 821 for a list of meeting topics with the specified consultee and an allocation time for each of the list of meeting topics. More details on the strategy category will be described below.

Hereinafter, a method of generating a report using company data according to the present invention will be described in more detail with reference to the processes described above.

### 2-1. Collection of subscription company data

In the present invention, a process of collecting subscription company data related to a platform subscription company may be performed (S510, see FIG. 5).

The control unit 130 may collect the platform subscription company data through at least one path of a server of the subscription company, a social networking service (SNS) of the subscription company, a homepage of the subscription company, an electronic document or report created by the subscription company, or an external website including information related to the subscription company.

For example, the subscription company data related to the platform subscription company may include at least one of a subscription company account, a product description uploaded directly by the subscription company, information on a product sold by the subscription company, various information disclosed on a homepage of the subscription company, a public disclosure material of the subscription company, a credit rating material, a job posting, the latest news, a CEO interview, or a press release.

### 2-2. Storage of subscription company data

Meanwhile, in the present invention, a process of storing the collected subscription company data in association with the subscription company account may be performed (S520, see FIG. 5).

The control unit 130 may store the subscription company data collected from the subscription company subscribing to the platform 100, in association with the subscription company account registered with the platform 100.

In this case, there may be a variety of spaces where the platform subscription company data associated with the platform subscription account is stored. For example, as illustrated in FIG. 1, the platform subscription company data may be stored in the database 110. As another example, the platform subscription company data may be stored on at least one of a cloud server (or cloud storage) that constitutes at least a portion of the database 110, a central server in conjunction with the platform 100, or an external server (e.g., a company server).

### 2-3. Reception of consultation information through consultation channel in conjunction with platform

Meanwhile, in the present invention, a process of receiving consultation information may proceed through a consultation channel in conjunction with the platform (S530, see FIG. 5).

The control unit 130 may receive the consultation information input from a consultee through various consultation channels in conjunction with the platform 100.

Here, the consultee that inputs the consultation information through the consultation channel may be a specific company itself, or one of the members affiliated with the specific company. The consultee may also be a specific business entity or a specific individual that operates a specific business.

In this case, the control unit 130 may, in order to specify a consultee who inputs the consultation information to the consultation channel, receive, along with the consultation information, consultee information including at least one of a name, a gender, an affiliated company (or company), a work title (or work position), an email, a telephone number, or personal information for the consultee.

For example, when receiving the consultee information through a chatbot, the control unit 130 may be configured to allow the consultation to proceed after the consultee information is input into the chatbot, or the language model to receive the consultee information through a query. As another example, when receiving the consultee information through a contact us page on the homepage of the subscription company, the control unit 130 may receive the consultee information by providing input fields such that the consultee information can be input on each of the input fields on the contact us page 400, as illustrated in FIG. 4.

When the consultation information is received through the consultation channel in conjunction with the platform 100, the control unit 130 may specify which specific subscription company among the platform subscription companies the consultation information is for.

Specifically, the control unit 130 may specify which subscription company the consultation information is for, based on which subscription company's channel the consultation information was received from. For example, assume that the specified consultee has input consultation information in the consultation channel of "subscription company A" in conjunction with the platform 100. The control unit 130 may specify that the consultation information is information related to the A subscription company, based on the consultation information being received through the consultation channel of the A subscription company in conjunction with the platform 100.

In addition, the control unit 130 may also specify which specific subscription company the consultation information is for through an analysis of a consultee's query included in the consultation information. In this case, it is possible to specify which specific subscription company the received consultation information is for with reference to the subscription company data stored in association with the platform subscription company account.

Further, the control unit 130 may, upon completion of the specification of the subscription company related to the consultation information, use at least one of various artificial intelligence technologies to analyze the intent of the consultee with respect to the query included in the consultation information and provide an appropriate answer corresponding to the intent of the consultee's query.

In this case, a format (or form) of the answer may be provided in at least one format of a table, a list, a numbered, an image, a video, an interaction, a chart, a graph, a block diagram, a text list, a source, or a link.

As described above, the control unit 130 may specify which company consultation information received through a consultation channel in conjunction with a platform is for, and provide an appropriate answer corresponding to the intent of the consultee's query content using various artificial intelligence technologies.

Meanwhile, the consultation information may be received through various consultation channels in conjunction with the platform 100.

The control unit 130 may receive the consultation information input from the consultee through at least one of various consultation channels. For example, as illustrated in FIG. 1, the consultation channel that is capable of receiving the consultation information may include at least one of an inquiry page (e.g., "contact us") on the homepage of the subscription company, a chatbot on the homepage in conjunction with the platform 100, an AI contact center (AICC), or an external channel (e.g., KakaoTalk).

First, the control unit 130 may be installed on the homepage of the platform subscription company and receive the consultation information through the chatbot in conjunction with the platform 100. For example, assume that a graphical user interface (GUI) is selected in response to a request to activate a chatbot on a specific company page, from a specific consultee. As illustrated in FIG. 3, the control unit 130 may provide a chatbot 310 in conjunction with the platform 100 with a specific consultee in an area of a specific company page 300.

As described above, the chatbot means a software application that is capable of having a natural conversation with a human. More specifically, the chatbot may be understood as a computer program that uses an artificial intelligence (AI) and natural language processing (NLP) to simulate human conversation to understand and automatically respond to a customer's question.

The control unit 130 may perform an answer to a query (or question) input from the specific consultee through the chatbot using the language model. The consultation information received through the chatbot may be configured to include an answer to a query using the query and language model input from the specific consultee. For example, as illustrated in FIG. 3, the consultation information 320 received through the chatbot 310 may include a query (e.g., "I want to implement an AI chatbot, but I'm not sure if there's a product that has the performance that I want", 321) input from the specific consultee and an answer in the language model to the query 321 (e.g., "42MARU offers a chatbot that is user-friendly. What do you usually find inconvenient?", 322).

Further, the control unit 130 may receive, through the consultation information, at least one of the inquiry page (e.g., "contact us") on the homepage of the subscription company, a chatbot on the homepage in conjunction with the platform 100, an AI contact center (AICC), or an external channel (e.g., KakaoTalk). For example, as illustrated in FIG. 4, the control unit 130 may receive, from the specific consultee, the consultation information input to the inquiry page 400 (e.g., "Hello, I would like to ask you about an AI chatbot. The chatbot I am currently using is very inconvenient because I have to manually enter the data one by one. Is there a chatbot solution that can be automatically entered without doing it manually?") based on a graphical object 411 included in the inquiry page 400 of the homepage of the specific subscription company being selected.

### 2-4. Specification of consultee and collection of consultee data

Meanwhile, in the present invention, a process of specifying a consultee from the consultation information and collecting consultee data related to the specified consultee may proceed (S540, see FIG. 5).

The control unit 130 may, in order to specify a consultee who inputs the consultation information to the consultation channel, receive, along with the consultation information, consultee information including at least one of a name, a gender, an affiliated company (or company), a work title (or work position), an email, a telephone number, or personal information for the consultee.

Therefore, the control unit 130 may specify the consultee from the consultation information received through the consultation channel in conjunction with the platform 100.

In this case, the specified consultee may be a specific company or a specific individual. Hereinafter, the specified consultee will be described without distinction.

Meanwhile, the control unit 130 may, upon of completion of the consultee specification, search for information related to the specified consultee through at least one of an external website, a report, newspaper news, or a company's credit rating material. For example, the external website may include at least one of a portal site, a social networking service (SNS), a blog, and a homepage of a company that the specific consultee is affiliated with.

The control unit 130 may generate a search term to search for information related to the specified consultee. More specifically, the control unit 130 may analyze the consultation information input from the specified consultee to specify a consultation topic related to the specified consultee. For example, as illustrated in FIG. 6, the control unit 130 may analyze content of consultation information 610 received via a chatbot 600 in conjunction with the platform 100 to specify the consultation topic as an "automation function of an AI chatbot".

The control unit 130 may specify a topic keyword related to the consultation topic when the specification of the consultation topic related to the specified consultee is completed. For example, as illustrated in FIG. 6, the control unit 130 may specify at least one of topic keywords (e.g., "artificial intelligence"), from the consultation topic (e.g., automation function of an A.I. chatbot) specified through an analysis of the consultation information 610.

Meanwhile, the control unit 130 may, upon completion of the specification of the topic keyword, generate (or set) a search term by associating the specified topic keyword with information related to the specified consultee.

Specifically, the control unit 130 may set a search term to include a name of the specified consultee and the topic keyword among the information on the specified consultee. For example, assume that the name of the specified consultee is "Mina Kim" and the topic keyword is "artificial intelligence". The control unit 130 may set the search term for collecting data related to the specified consultee from a search result of the external website by associating the specified consultee's name (e.g., Mina Kim) with the specified topic keyword (e.g., artificial intelligence).

The control unit 130 may search for information related to the specified consultee by inputting the set search term (e.g., Mina Kim artificial intelligence or Mina Kim AI) into an area of the external website.

Further, the control unit 130 may collect data related to the specified consultee from a search result of the external website. For example, the control unit 130 may collect a news article including information related to the specified consultee (e.g., "Interview with Director Mina Kim in September this year. Not hesitant to learn new technologies. Strong IT knowledge. Aggressive implementation of artificial intelligence") as data related to the specified consultee.

That is, the control unit 130 may collect any data as long as the data includes information related to the specified consultee.

### 2-5. Generation of report

Meanwhile, in the present invention, a process of generating a report related to the specified consultee may proceed using a language model with at least some of the subscription company data and consultee data as input (S550, see FIG. 5).

The control unit 130 may generate a report related to the specified consultation topic using the search result searched from the external website through the search term set to include the topic keyword and the specific company data related to the specified consultation topic.

In this case, the specific company data related to the specific consultation topic may mean data related to the specified consultation topic among the subscription company data stored in the platform 100.

As described above, the control unit 130 may use at least one of various artificial intelligence algorithms to specify that specific company data that includes information related to the specified consultation topic among the subscription company data stored in association with the subscription company account.

For example, assume that the specified consultation topic is an "automation function of an AI chatbot". The control unit 130 may specify the specific company data (e.g., "data related to an AI chatbot") that includes information related to the specified consultation topic (e.g., automation function of an AI chatbot) among the subscription company data pre-stored in the platform 100.

The control unit 130 may process at least some of the specific company data and the consultee data related to the consultation topic as input to the language model, such that a report is generated in relation to the consultation topic when the specification of the specific company data is completed.

Here, the language model may be understood as a language model in which a prompt engineering process has been performed, such that the language model may be used to generate a report related to the specified consultee.

Specifically, the control unit 130 may process at least some of the platform subscription company data and the consultee data, and an appropriate prompt based thereon, as input to the language model to generate a report related to the specified consultee. For example, the control unit 130 may process a first prompt based on the platform subscription company data and the consultee data (e.g., "Please configure the report to include a consultation request confirmation, a summary of the conversation, company information, company analysis, meeting strategy, and a winning scenario") as input to the language model to generate a report related to the specific consultee and reflecting the first prompt.

In another example, the control unit 130 may process a second prompt based on the platform subscription company data and the consultee data (e.g., please tabulate the last three years of sales, expenses, operating profit, etc. of the company the consultee is affiliated with, and analyze the latest news from that company) as input to the language model to generate a report related to the specific consultee and reflecting the second prompt.

A report generated in relation to the specified consultation topic in the present invention may be configured to include content for each of a plurality of predefined categories.

In this case, graphical objects 701 and 702 included in the report 700 may be understood as the graphical objects 701 and 702 that are in conjunction so as to identify a source of the consultation information received through a channel in conjunction with the platform. When the graphical objects 701 and 702 are selected, a channel (or page) may be connected to identify the received consultation information (see FIG. 6).

As illustrated in FIG. 7, each of the plurality of predefined categories 710, 720, 730, and 740 included in the report 700 may include at least one of a summary category (e.g., "summarize conversation," 710) summarizing the consultation information, a company current situation category (e.g., "company information," 720) including company information for the specified consultee, a latest current situation category (e.g., "company analysis," 730) including latest information on the specified consultee, or a strategy category (e.g., "meeting strategy," 740) including meeting strategy information with the specified consultee.

The control unit 130 may analyze the consultation information to specify at least one category of the plurality of predefined categories 710, 720, 730, and 740 that requires content to be generated.

As an example, the control unit 130 may specify all of the summary category 710, the company current situation category 720, the latest current situation category 730, and the strategy category 740 among the plurality of categories 710, 720, 730, and 740 as categories for which content needs to be generated in order to describe the business strategy and products to be suggested to the specified consultee when the consultation information includes that the consultee wants a business suggestion along with information on the products.

As another example, the control unit 130 may specify the summary category 710 only among the plurality of categories 710, 720, 730, and 740 as a category that requires the content to be generated when the consultation information is relatively simple or does not require a specific strategy or analysis.

That is, the control unit 130 may analyze the consultation information to specify all of the plurality of predefined categories 710, 720, 730, and 740 as categories that require content generation, or only some of the plurality of categories 710, 720, 730, and 740 as categories that require content generation.

Further, the control unit 130 may generate content for each of the specified categories using the specific company data and consultee data related to the specified consultation topic when the specification of the categories requiring content to be generated is completed. For example, as illustrated in FIGS. 6 and 7, based on the consultation information 610 received through the chatbot 600 in conjunction with the platform 100, which includes an inquiry to introduce a new product to improve an inconvenience with a currently used product, all of the summary category 710, the company current situation category 720, the latest current situation category 730, and the strategy category 740 among the plurality of categories 710, 720, 730, and 740 may be specified as categories for which content needs to be generated in order to describe the business strategy and product to be suggested to the specified consultee. Then, the control unit 130 may generate content 711, 721, 731, and 741 related to each of the plurality of categories 710, 720, 730, and 740 that have been specified.

Meanwhile, the strategy category, among the plurality of categories present in the report generated in relation to the consultation topic, may be configured to include a plurality of sub-categories.

Here, the strategy category may include information to more effectively promote the products or services of the company, such as a business strategy and drive business growth using efficient marketing strategies, through the analysis of the personality of a representative identified through persona analysis for the specified consultee and the data related to the specified consultee.

As illustrated in FIGS. 8A and 8B, the strategy category 800 may include a plurality of sub-categories 810 and 820, including a consultation intent identification category (e.g., "consultation intent", 810) for the specified consultee and a winning scenario category (e.g., "winning scenario: suggestion", 820) for the specified consultee.

The consultation intent identification category 810 of the plurality of sub-categories 810 and 820 of the strategy category 800 may include content regarding what intent the consultee had in requesting the consultation, by analyzing the intent of the consultation information. For example, as illustrated in FIGS. 8A and 8B, the consultation intent identification category 810 may include content related to the consultee's consultation intent (e.g., "uncomfortable with manual data entry, difficulty in quick response", "desired to implement a solution to automatically answer questions without human input", "desired to inquire about budget and implementation schedule", 811).

Further, the winning scenario category 820 of the plurality of sub-categories 810 and 820 of the strategy category 800 may include content 821 for a list of meeting topics with the specified consultee and an allocation time for each of the list of meeting topics.

As described above, the control unit 130 may analyze the consultation information to specify at least one category that requires content generation among the plurality of predefined categories, and generate a report that includes content for each of the specified categories.

Meanwhile, the control unit 130 may provide an administration page (or administration program) that allows a platform subscriber to configure a report in the form that the subscriber desires.

The control unit 130 may receive a request to generate a report from a subscriber account of the platform subscription company through the administration page.

The platform subscriber may transfer a request to configure the report in the form the subscriber desires through the administration page.

When the control unit 130 receives a request for report generation from the subscriber account, the control unit 130 may reflect the received request and generate the report.

For example, assume that a first request related to report generation is received from the subscriber account (e.g., if you have a representative or consultee interview, please summarize the content and tell me what the consultee's personality is like). The control unit 130 may generate the report by ensuring that an item corresponding to the received first request (e.g., consultee analysis) is reflected in the report.

For another example, assume that a second request is received from the subscriber account related to report generation (e.g., "Please show me a detailed tabular breakdown of how I can persuade the consultee through my actions, segmented by time slots"). The control unit 130 may generate the report by ensuring that an item corresponding to the received second request (e.g., winning scenario) is reflected in the report.

While not limited to the above, the control unit 130 may provide an administration page that allows the platform subscriber to configure the report in the form that the subscriber desires, using prompt engineering and administration functions. The platform subscriber may configure the report in the form that the subscriber desires.

Further, a history (or method) related to report generation for each of the platform subscriber accounts is stored in the platform 100, and a platform administrator may identify the history related to the report generation for each of the platform subscriber accounts.

Meanwhile, the control unit 130 may provide a meeting proposal wording to the account of the platform subscriber. Here, the meeting proposal wording may be understood to be transferred by the platform subscriber to proceed with a meeting with the specified consultee, and may be optimized and generated to be transferred to the consultee's email, message, messenger, etc.

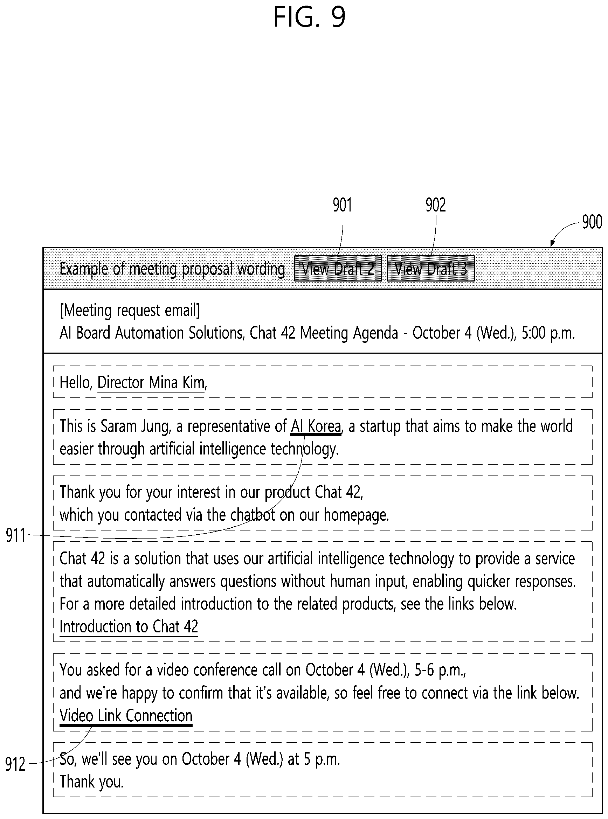

As illustrated in FIG. 9, the control unit 130 may generate a meeting proposal wording 900 that includes a greeting, a meeting-related topic, an available meeting schedule, a meeting proposal content, and the like, based on specific company data related to the specified meeting topic and the specified consultee data.

The meeting proposal wording 900 may be configured in plural. The platform subscriber may select at least one of the plurality of meeting proposal wordings to identify each wording. For example, when the graphical object 901 corresponding to a second meeting proposal wording is selected in a state where a first meeting proposal wording has been output, the second meeting proposal wording may be output that is different from the first meeting proposal wording. For another example, when the graphical object 902 corresponding to a third meeting proposal wording is selected in a state where the first meeting proposal wording or the second meeting proposal wording has been output, the third meeting proposal wording may be output that is different from the first meeting proposal wording or the second meeting proposal wording.

The platform subscriber may select at least one of the plurality of meeting proposal wordings and perform an operation to freely modify the wording as desired.

Further, at least some of the content included in the meeting proposal wording 900 may have link information in association therewith. For example, a first content 911 of the meeting proposal wording 900 may have link information connected to a homepage of a specific company in conjunction therewith. As another example, a second content 911 of the meeting proposal wording 900 may have link information connected to a program that can perform a video conference call with the subscriber in conjunction therewith.

In this case, the content that the consultee has viewed (or selected) among the contents linked to the link information may be configured to be identified. That is, the platform subscriber may identify the consultee's link access history and what content the consultee viewed.

### 2-6. Provision of report

Meanwhile, in the present invention, a process of providing the generated report to a subscriber account of the subscription company may proceed (S560, see FIG. 5).

The control unit 130 may provide the report generated using the search result searched from the external website through the search term set to include the topic keyword and the specific company data related to the specified consultation topic with the subscriber account of the platform subscription company.

In the platform 100, a plurality of subscriber accounts may be registered and present, each corresponding to a plurality of subscribers affiliated with a company subscribing to the platform. Subscriber information including at least one of a name, a gender, an affiliation, a job, an address, an age, a phone number, and personal information may be present matched to each of the plurality of subscriber accounts.

The control unit 130 may specify an optimal subscriber among the plurality of subscribers affiliated with the platform subscription company, based on a job related to the consultation topic or a previous consultation history result, linked external CRM data, and analytical results of its own, including the number of meetings the subscriber is currently responsible for.

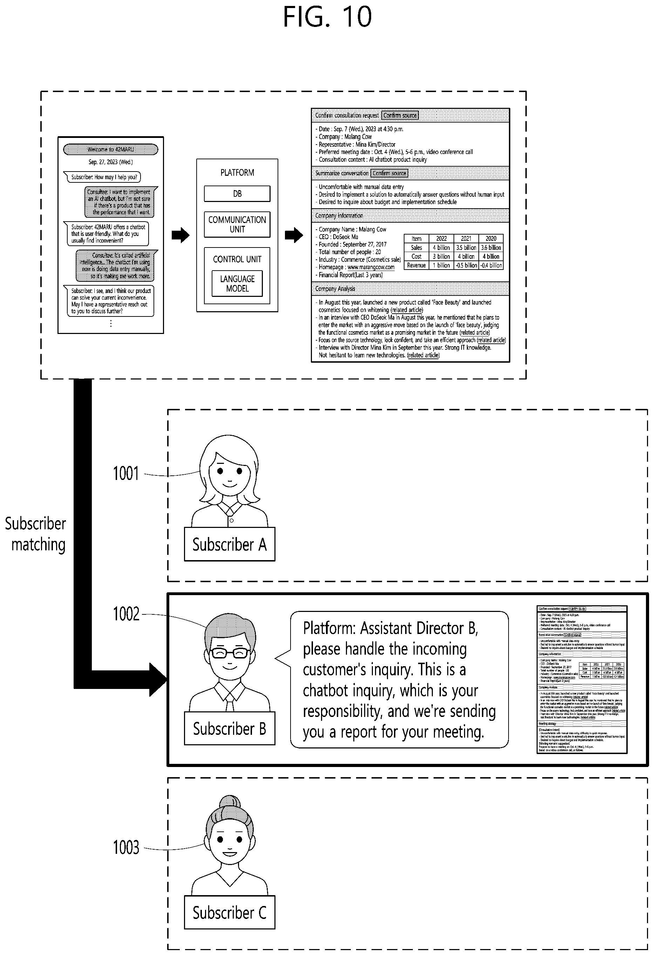

For example, assume that the consultation topic is specified as an "automation function of AI chatbot". In this case, as illustrated in FIG. 10, assume that among a plurality of subscribers 1001, 1002, and 1003 affiliated with the platform subscription company, a first subscriber (e.g., "subscriber A", 1001) is in charge of a job related to a "chemistry" field, a second subscriber (e.g., "subscriber B", 1002) is in charge of a job related to an "artificial intelligence" field, and a third subscriber is in charge of a job related to an "electricity" field.

The control unit 130 may specify, based on a specified consultation topic (e.g., automation function of an AI chatbot), the second subscriber 1002 as a subscriber having a job related to the consultation topic.

Further, the control unit 130 may provide a report generated using the search result searched from the external website through the search term set to include the topic keyword and the specific company data related to the specified consultation topic to the subscriber account specified as a subscriber having a job related to the consultation topic. For example, as illustrated in FIG. 10, the generated report may be provided to an account of the second subscriber (e.g., "subscriber B", 1002) that has a job related to the specified consultation topic (e.g., automation function of an AI chatbot).

In this case, it is obvious that providing the report by matching the subscriber may be performed by a platform administrator who administers the system among the subscribers affiliated with the platform subscription company.

In addition, the platform subscribers may use the platform 100 to record an actual meeting result, and the corresponding recorded content may be stored in the DB 110, which may be used as basis data for specifying an optimal subscriber through result analysis in the control unit 130.

Further, the platform administrator may use the platform 100 to link data with the external CRM services to provide a function of importing and exporting customer data, and the corresponding recorded content may be stored in the DB 110 and used as basis data for specifying an optimal subscriber through result analysis in the control unit 130.

As described above, the method and system for generating a report using company data, according to the present invention, can specify which company consultation information received through a consultation channel in conjunction with a platform is for, and provide an appropriate answer to a consultee's consultation content for a specified company using various artificial intelligence algorithms.

Further, by matching a subscriber who has a job related to a consultation topic, it is possible to provide a report that includes various contents. The subscriber who receives the report will be able to more effectively promote products or services of the company that the subscriber is affiliated with through the various contents included in the report, and lead business growth using efficient marketing strategies.

Meanwhile, the present invention described above may be executed by one or more processes on a computer and implemented as a program that can be stored on a computer-readable medium (or recording medium).

Further, the present invention described above may be implemented as computer-readable code or instructions on a medium in which a program is recorded. That is, the present invention may be provided in the form of a program.

Meanwhile, the computer-readable medium includes all kinds of storage devices for storing data readable by a computer system. Examples of computer-readable media include hard disk drives (HDDs), solid state disks (SSDs), silicon disk drives (SDDs), ROMs, RAMs, CD-ROMs, magnetic tapes, floppy discs, and optical data storage devices.

Further, the computer-readable medium may be a server or cloud storage that includes storage and that the electronic device is accessible through communication. In this case, the computer may download the program according to the present invention from the server or cloud storage, through wired or wireless communication.

Further, in the present invention, the computer described above is an electronic device equipped with a processor, that is, a central processing unit (CPU), and is not particularly limited to any type.

Meanwhile, it should be appreciated that the detailed description is interpreted as being illustrative in every sense, not restrictive. The scope of the present invention should be determined based on the reasonable interpretation of the appended claims, and all of the modifications within the equivalent scope of the present invention belong to the scope of the present invention.

## Claims

1. A method of generating a report using company data, the method comprising:
collecting subscription company data related to a company subscribing to a platform;
storing the collected subscription company data in association with a subscription company account;
receiving consultation information through a consultation channel in conjunction with the platform;
specifying a consultee from the consultation information, and collecting consultee data related to the specified consultee;
generating a report related to the specified agent, using a language model with at least some of the subscription company data and the consultee data as input; and
providing the generated report to a subscriber account of the subscription company.

2. The method of claim 1, further comprising:
searching for information related to the specified consultee through an external website,
wherein the collecting of the consultee data comprises collecting the consultee data from a search result of the searching,
wherein the generating of the report comprises generating the report using the consultee data collected from the external website, and
wherein the specified consultee is a specific company or a specific individual.

3. The method of claim 2, further comprising:
specifying, by analyzing the consultation information, a consultation topic related to the specified consultee; and
specifying specific company data related to the consultation topic among the company data,
wherein in the generating of the report, the specific company data related to the consultation topic is processed as input to the language model, such that the report is generated in relation to the consultation topic.

4. The method of claim 3, wherein the searching further comprises:
specifying a topic keyword related to the consultation topic;
setting a search term to include a name of the specified consultee and the topic keyword; and
searching, using the search term, for information related to the specified consultee, from the external website, and
wherein in the generating of the report, the report is generated in relation to the consultation topic, using a search result searched from the external website and specific company data related to the consultation topic as the search term including the topical keyword.

5. The method of claim 4, wherein the report is configured to include content for each of a plurality of predefined categories, and
wherein the plurality of categories comprises at least one of a summary category configured to summarize the consultation information, a company current situation category including company information of the specified consultee, a latest current situation category including latest information on the specified consultee, or a strategy category including strategy information on meeting with the consultee.

6. The method of claim 5, wherein in the generating of the report, at least one category of the plurality of categories requiring content generation is specified by analyzing the consultation information, content is generated in each of the specified categories, using the specific company data and the consultee data related to the consultation topic, and in relation to the generation of the report, upon receipt of a request related to the generation of the report from the subscriber account, the report is generated by reflecting the received request.

7. The method of claim 5, wherein the strategy category is configured to include a plurality of sub-categories, and
wherein the plurality of sub-categories comprises a consultation intent identification category for the specified consultee and a winning scenario category for the specified consultee.

8. The method of claim 7, wherein the winning scenario comprises content for a list of meeting topics with the specified consultee and an allocation time for each of the list of meeting topics.

9. The method of claim 1, further comprising:
providing the generated report to a subscriber account of the subscription company using a search result searched from the external website using specific company data related to the consultation topic as the search term including the topic keyword.

10. The method of claim 3, wherein, in the platform, a plurality of subscriber accounts are registered and exist, each corresponding to a plurality of subscribers affiliated with the subscription company,
wherein in the providing of the report, among the plurality of subscribers, a specific subscriber having a job related to the consultation topic is specified, and
wherein the report is provided to the subscriber account of the specific subscriber that has been specified.

11. The method of claim 1, wherein the consultation information is received through a chatbot installed on a homepage of the subscription company and in conjunction with the platform.

12. The method of claim 11, wherein the consultation information is configured with a query input from the specified consultee through the chatbot and an answer to the query generated using the language model.

13. The method of claim 1, wherein the consultation information is received through at least one of an inquiry page on the homepage of the subscription company, an external messenger in conjunction with the platform, or an AI contact center (AICC) in conjunction with the platform.

14. A system for generating a report using company data, comprising a control unit,
wherein the control unit of the system is configured to:
collect, in cooperation with at least one artificial intelligence model, subscription company data related to a platform subscription company;
store the collected subscription company data in association with a subscription company account;
receive consultation information through a consultation channel in conjunction with the platform;
specify a consultee from the consultation information;
collect consultee data related to the specified consultee;
generate a report related to the specified consultee, using a language model with at least some of the subscription company data and the consultee data as input; and
provide the generated report to a subscriber account of the subscriber company.

15. A program executed by one or more processes on an electronic device and stored on a computer-readable recording medium,
wherein the program comprising instructions to perform steps of:
collecting subscription company data related to a platform subscription company;
storing the collected subscription company data in association with a subscription company account;
receiving consultation information through a consultation channel in conjunction with the platform;
specifying a consultee from the consultation information;
collecting consultee data related to the specified consultee;
generating a report related to the specified consultee, using a language model with at least some of the subscription company data and the consultee data as input; and
providing the generated report to a subscriber account of the subscriber company.
